Europäisches Patentamt

European Patent Office

Office européen des brevets

(11) Publication number: **0 077 431**
**A2**

(12) # EUROPEAN PATENT APPLICATION

(21) Application number: 81830236.6

(51) Int. Cl.³: **B 62 H 5/08**

(22) Date of filing: 24.11.81

(30) Priority: 15.10.81 IT 4949381

(43) Date of publication of application:
27.04.83 Bulletin 83/17

(84) Designated Contracting States:
AT BE CH DE FR GB LI NL SE

(71) Applicant: Calmonte, Renzo
Via Bassanese, 35
I-31037 Loria (TV)(IT)

(71) Applicant: Martini, Silla
Via Bassanese, 35
I-31037 Loria (TV)(IT)

(71) Applicant: Pinarello, Ezio
Via Bassanese, 35
I-31037 Loria (TV)(IT)

(72) Inventor: Calmonte, Renzo
Via Bassanese, 35
I-31037 Loria (TV)(IT)

(72) Inventor: Martini, Silla
Via Bassanese, 35
I-31037 Loria (TV)(IT)

(72) Inventor: Pinarello, Ezio
Via Bassanese, 35
I-31037 Loria (TV)(IT)

(74) Representative: Mascioli, Alessandro, Prof.Dr.
c/o A.N.D.I. Associazione Nazionale degli Inventori Via
Lima, 35
I-00198 Roma(IT)

(54) Anti-theft device for motorcycles applied to the parking stand.

(57) Anti-theft device for motorcycles applied to the parking
stand so as to be automatically connected when the
motorcycle is raised up onto the stand itself and which may
be disconnected by means of a key or other mechanical
device or by means of an electrical contact, so as to enhance
the traditional function of the parking stand by making
movement of the motorcycle impossible.

FIG.4

EP 0 077 431 A2

Croydon Printing Company Ltd.

**0077431**

## Anti-theft device for motorcycles applied to the parking stand

MARTINI Silla, PINARELLO Ezio and CALMONTE Renzo of
Via Bassanese, 35  - 31037 LORIA (TV) - Italy

This invention concerns a new type of anti-theft device for motorcycles and the like which is applied to the parking stand.

It is well known that the most common fixed anti-theft devices for motorcycles, motorized bicycles and the like consist of mechanically or electrically operated blocking devices applied to the handle-bar. Moreover, said devices are detached in positions which allow thieves easy access, frequently resulting in damage to them.

The aim of this invention is to realize a safe and simple anti-theft device for motorcycles applied in positions which make intervention by thieves difficult.

This aim is achieved with a device applied to the parking stand so as to be automatically connected when the motorcycle is raised up onto the stand itself (thus independently of the memory and willingness of the cyclist) and which may be disconnected by means of a key or other mechanical device or by means of an electircal contact, so as to enhance the traditional function of the parking stand by making movement of the motorcycle

impossible.

In the possible variants of the invention, the stand when raised may be blocked in various ways within the structure of the motorcycle or may be blocked by external devices.

In all the variants of the invention, the device may be unlocked with a mechanical extension or electrical circuit operated with keys, relays, buttons and the like, located on the handle-bar.

The invention is represented in some preferred purely exemplifying variations in the attached drawings, in figures 1 to 11.

Figures 1 and 2 show two possible mechanical blocking devices for the stand.

Figure 3 shows a block placed on the internal extension of the lever formed by the stand.

Figure 4 shows the possible mechanical or electircal conduction of the unblocking control, from the instrument panel to the stand.

Figures 5, 6 and 7 respectively show cross sections of an anti-theft variant not connected when the stand is raised, connected and blocked when the stand is lowered into the parking position, and released for re-raising.

Figures 8, 9, 10 and 11 show the connection - disconnection sequence for a variant analogous to that shown in figure 2.

In particular, the drawings show stand 1 rotating about fulcrum 2, equipped with elastic functioning structures of known type, and bearing single or double fin 3 pierced in 4, such that when the motrocycle 5 is raised up for parking, said fin rotates and is inserted in blocking device 6, form which it may be released only with a key 7 or the like. A thief would have considerable difficulty in removing said device because he would be required to work at ground level on the stand, an impossibility in the presence of any witnesses or passers-by.

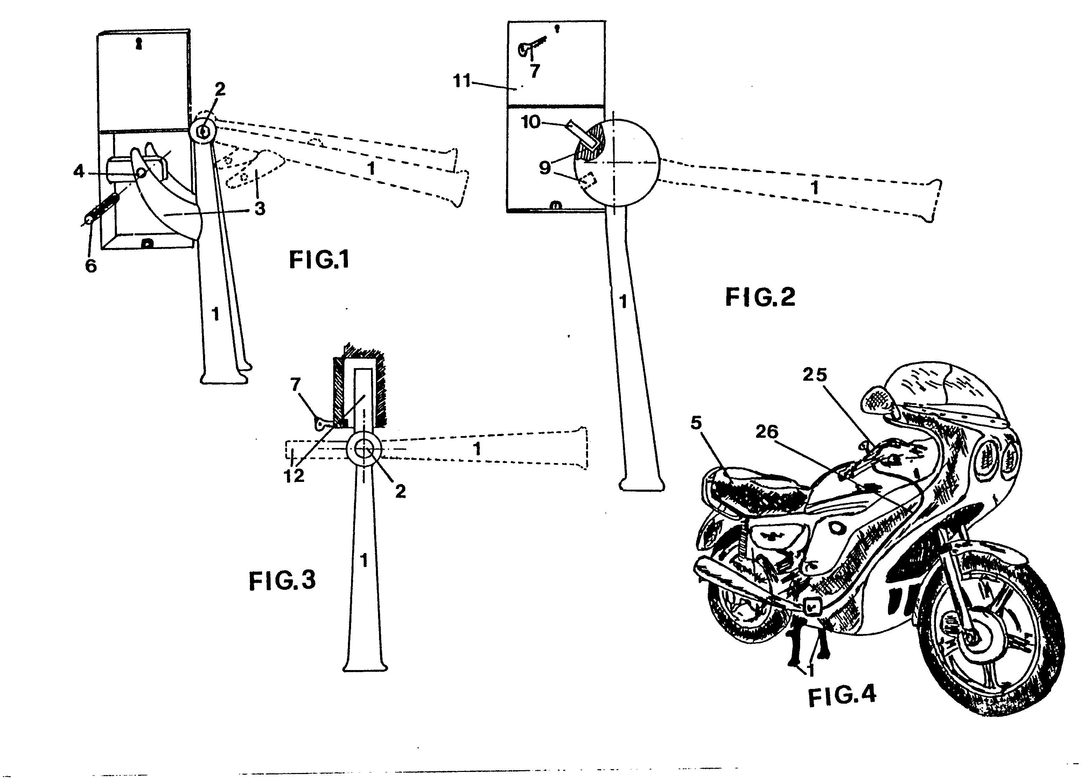

In the variant shown in figure 2, the end of stand 1 is joined to disk 8 with peripheral opening 9 so that when the stand is rotated pin 10 is inserted in automatic blocking device 11, openable afterwards with key 7 or in some other way.

In the exemplifying variant shown in figure 3, rotation of the stand around fulcrum 2 causes, at the end of the movement, automatic blocking of the attached extension 12, which may vary in length as long as it fits in an internal space of the motorcycle 5, thus enhancing the anti-theft properties since no external component is involved.

In all the variants a small carter or protection device may be added to protect the mechanisms from mud and water thrown up during travel.

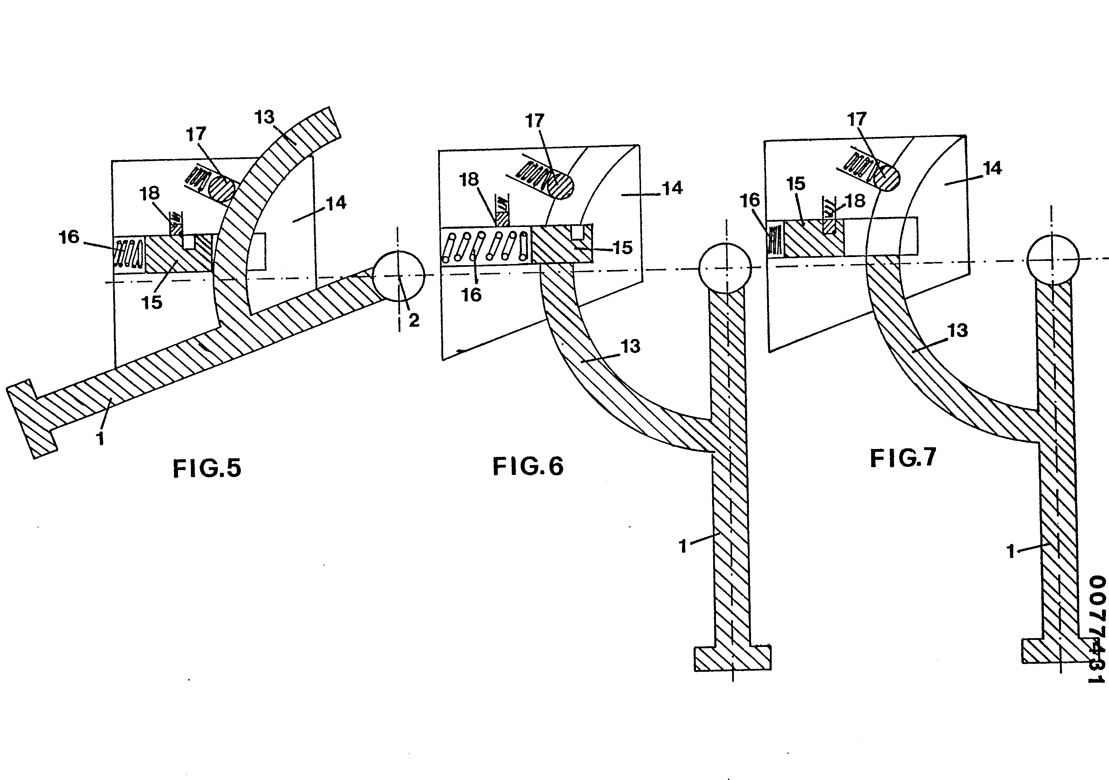

In the variant shown in figures 5, 6 and 7 joined to parking stand 1 is curved gudgeon 13 which is inserted into a suitable hole in lock 14 such that pin 15 pushed by spring 16 is blocked against the surface of gudgeon 13 since push-button 17, in figure 5, has disconnected rod 18 to release from manual control pin 15, previously moved back by the key opening the anti-theft device.

In the parked position shown in figure 6, gudgeon 13 has been extracted from 14 since it is joined to stand 1 to release pin 5, which is pushed by spring 16 into a suitable hole in lock 14 thus absolutely preventing return of gudgeon 13 and forcing stand 1 to remain in the park position. At the same time, push-button 17 has also been released and so rod 18 presses against pin 15, which cannot be blocked since groove 19 is no longer in correspondence with rod 18.

Finally, as shown in figure 7, when pin 15 is recalled with a key or analogous method, rod 18 is inserted in groove 19 to hold said pin 15. This allows gudgeon 13 to be raised and so the anti-theft device to be discon- ected.

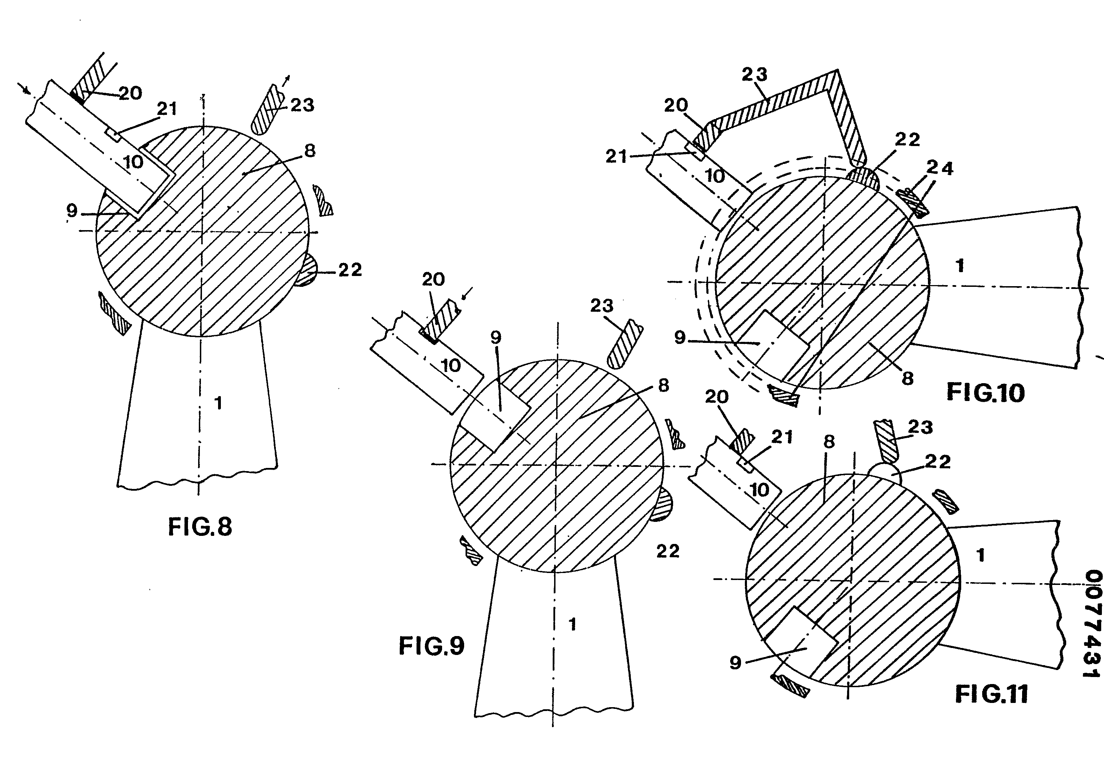

In the variant shown in figures 8, 9, 10 and 11, stand 1 is joined to disk 8, the rotation of which is prevented (as the anti-theft device) by the penetration of pin 10 in suitable opening 9. Said pin 9 is then raised with a key or the like until it is blocked by the insertion of gudgeon 10 in slot 21, with consequent release of stand 1 and so possibility of moving the vehicle. To re-establish the blocking condition, stand 1 is just rotated until protuberance 22, through mechanical transmission 23, raises gudgeon 10, which is pushed by a spring of known type into contact with the external surface of disk 8 until it penetrates opening 9. All the moveable parts are furthermore covered with small carter 24 or the like in order to prevent the entrance of mud, water or the like.

Claims:

1. Mechanical or electrical anti-theft device for motorcycles and the like wherein it is applied to the parking stand, which when raised may be blocked in various ways within the structure of the motorcycle or may be blocked by external devices.

2. Anti-theft device for motorcycles as claimed in claim 1 wherein the device may be unlocked with a mechanical extension or electrical circuit operated with keys, relays, buttons and the like, located on the handle-bar.

3. Anti-theft device for motorcycles as claimed in claim 1 with stand 1 rotating about fulcrum 2, equipped with elastic functioning structures of known type, and bearing single or double fin 3 pierced in 4, such that when the motorcycle 5 is raised up for parking, said fin rotates and is inserted in blocking device 6, from which it may be released only with a key 7 or the like, while a thief would have considerable difficulty in removing said device because he would be required to work at ground level on the stand, an impossibility in the presence of any witnesses or passers-by.

4. Anti-theft device for motorcycles as claimed in claim 1 wherein stand 1 is joined to disk 8, the rotation of which is prevented (as the anti-theft device) by the penetration of pin 10 in suitable opening 9; said pin 9 is then raised with a key or the like until it is blocked by the insertion of gudgeon 20 in slot 21, with consequent release of stand 1 and so possibility of moving the vehicle; to re-establish the blocking condition, stand 1 is just rotated until protuberance 22, through mechanical transmission 23, raises gudgeon 10, which is pushed by a spring of known type into contact with the external surface of disk 8 until it penetrates opening 9.

5. Anti-theft device for motorcycles as claimed in claim 1 wherein rotation of the stand around fulcurm 2 causes, at the end of the movement, automatic blocking of the attached extension 12, which may vary in length as long as it fits in an internal space of the motorcycle 5, thus enhancing the anti-theft properties since no external component is involved.

6. Anti-theft device for motorcycles as claimed in claim 1 wherein joined to parking stand 1 is curved gudgeon 13 which is inserted into a suitable hole in lock 14 such that pin 15 pushed by spring 16 is blocked against the surface of gudgeon 13 since push-button 17 has disconnected rod 18 to release from manual control pin 15, previously moved back by the key opening the anti-theft device.

7. Anti-theft device for motorcycles as claimed in

**0077431**

claim 1 wherein a small carter or protection device may be added to protect the mechanisms from mud and water thrown up during travel.

**FIG.1**

**FIG.2**

**FIG.3**

**FIG.4**

FIG.5　　　FIG.6　　　FIG.7

FIG.8

FIG.9

FIG.10

FIG.11